# EUROPÄISCHE PATENTSCHRIFT

(11) **EP 3 841 045 B1**
(45) Veröffentlichungstag und Bekanntmachung des Hinweises auf die Patenterteilung: **27.03.2024**
(21) Anmeldenummer: 19755369.6
(22) Anmeldetag: 15.08.2019
(51) Int. Cl.: B65G 57/24, B65G 61/00

(54) **PALETTIERVORRICHTUNG UND VERFAHREN ZUM BETRIEB EINER PALETTIERVORRICHTUNG**
PALLETISING SYSTEM AND METHOD FOR OPERATING A PALLETISING SYSTEM
DISPOSITIF DE PALETTISATION ET PROCÉDÉ POUR FAIRE FONCTIONNER UN DISPOSITIF DE PALETTISATION

(30) Priorität: 21.08.2018 DE 102018214047
(43) Veröffentlichungstag der Anmeldung: 30.06.2021
(73) Patentinhaber: Körber Supply Chain Automation Eisenberg GmbH, 67304 Eisenberg (DE)
(72) Erfinder: BLASIUS, Christopher, 67725 Börrstadt (DE)
(74) Vertreter: Hörschler, Wolfram Johannes
(86) Internationale Anmeldenummer: PCT/EP2019/071948
(87) Internationale Veröffentlichungsnummer: WO 2020/038827

(56) Entgegenhaltungen:
- EP-A1- 2 537 783
- CH-A- 556 008
- DE-A1-102014 223 319
- JP-A- 2012 013 953
- US-A1- 2014 294 553

## Beschreibung

Die Erfindung betrifft eine Palettiervorrichtung zum Absetzen von Artikellagen auf einem Transporthilfsmittel, beispielsweise einer Palette, oder auf einem auf dem Transporthilfsmittel befindlichen Lagenstapel, umfassend eine Hubvorrichtung, welche in Form einer Säule ausgebildet ist und mindestens drei Seiten aufweist, und welche mindestens drei separate Führungseinrichtungen aufweist, wobei an mindestens drei Seiten jeweils eine der mindestens drei Führungseinrichtungen angeordnet ist, und wobei an mindestens drei Führungseinrichtungen jeweils mindestens ein Wagen in eine Vertikalrichtung beweglich geführt ist. Die Erfindung betrifft auch ein Verfahren zum Betrieb einer entsprechenden Palettiervorrichtung zum Absetzen einer Artikellage auf einem Transporthilfsmittel oder auf einem auf dem Transporthilfsmittel befindlichen Lagenstapel.

### Stand der Technik

Eine Palettiervorrichtung dient dazu, Artikel, insbesondere Stückgüter, oder Gebinde zum Transport auf Transporthilfsmitteln, insbesondere Paletten, anzuordnen. Dazu werden die Artikel beispielsweise zunächst zu einzelnen Artikellagen zusammengefasst und dann lagenweise auf dem Transporthilfsmittel, beziehungsweise auf einem bereits auf dem Transporthilfsmittel befindlichen Lagenstapel, abgesetzt. Zur Palettierung durchlaufen die Artikel normalerweise zunächst eine Zuführvorrichtung, in der die zunächst einreihig oder mehrreihig hintereinander ankommenden Artikel zu stapelfähigen Artikellagen verschoben und/oder zusammengestellt werden. Die stapelfähigen Artikellagen werden dann nacheinander an die Palettiervorrichtung übergeben, welche die Artikellagen auf einem gewünschten Stapelplatz, insbesondere auf einem Transporthilfsmittel, absetzt.

Die Palettiervorrichtung umfasst dazu beispielsweise eine Hubvorrichtung, an welcher mehrere Wagen in Vertikalrichtung beweglich angebracht sind. An einem dieser Wagen ist beispielsweise eine Absetzvorrichtung befestigt.

Bei der Palettierung wird jeweils eine stapelfähige Artikellage auf eine Transportfläche der Absetzvorrichtung transportiert, und der Wagen mit der Absetzvorrichtung wird an der Hubvorrichtung vertikal verfahren. Anschließend wird die Artikellage auf dem Lagenstapel abgesetzt. Die unterste Artikellage eines Lagenstapels wird dabei direkt auf dem Transporthilfsmittel abgesetzt.

Eine gattungsgemäße Palettiervorrichtung ist beispielsweise aus dem Dokument DE 10 2014 223 319 A1 bekannt. Die Palettiervorrichtung umfasst eine Hubwerksäule mit drei separaten Führungseinrichtungen, die an verschiedenen Seiten der Hubwerksäule angeordnet sind. An jeder der Führungseinrichtungen ist jeweils eine Transferstation vertikal beweglich geführt.

Aus der Druckschrift EP 2 610 197 A1 ist eine Palettiervorrichtung bekannt, welche eine Hubvorrichtung umfasst, an der zwei Wagen vertikal beweglich angebracht sind. An einem Wagen ist dabei ein Förderband und an dem anderen Wagen eine Absetzvorrichtung angeordnet. Bei der Palettierung wird eine Artikellage von dem Förderband auf die Bodenfläche der Absetzvorrichtung gefördert.

Auch aus der Druckschrift US 2014/0294553 A1 ist eine Palettiervorrichtung bekannt, welche eine Hubvorrichtung umfasst, an der zwei Wagen vertikal beweglich angebracht sind. An einem Wagen ist dabei ein Förderband und an dem anderen Wagen eine Absetzvorrichtung angeordnet.

Eine Palettiervorrichtung ist auch aus dem Dokument EP 2 881 347 B1 bekannt.

Die Palettiervorrichtung umfasst eine Hubwerksäule mit zwei separaten Führungseinrichtungen. Dabei ist an der einen Führungseinrichtung eine Transferstation und an der anderen Führungseinrichtung eine Beladestation vertikal beweglich geführt.

Auch aus den Dokumenten DE 10 2007 022 908 A1, EP 2 842 895 A1, DE 41 14 215 A1, EP 2 653 417 A1, DE 199 43 800 A1, DE 10 2015 206 124 A1, DE 10 2011 088 849 A1 und EP 2 547 612 B1 sind Palettiervorrichtungen sowie Verfahren zur Palettierung von Artikellagen bekannt.

### Aufgabe

Aufgabe der vorliegenden Erfindung ist es, eine Palettiervorrichtung der eingangs genannten Art zu verbessern. Insbesondere ist es Aufgabe der Erfindung, den Platzbedarf zu verringern und die Flexibilität bei der Gestaltung des Layouts zu erhöhen.

### Lösung

Diese Aufgabe wird durch eine Palettiervorrichtung mit den Merkmalen des Anspruchs 1 gelöst. Vorteilhafte Ausgestaltungen und Weiterbildungen der Erfindung sind Gegenstand der Unteransprüche.

Eine gattungsgemäße Palettiervorrichtung zum Absetzen von Artikellagen auf einem Transporthilfsmittel oder auf einem auf dem Transporthilfsmittel befindlichen Lagenstapel umfasst eine Hubvorrichtung, welche in Form einer Säule ausgebildet ist und mindestens drei Seiten aufweist. Die Säule erstreckt sich dabei in eine Vertikalrichtung und ist vorteilhaft als gerades Prisma ausgestaltet. Das Transporthilfsmittel ist beispielsweise eine Palette.

Die Hubvorrichtung weist mindestens drei separate Führungseinrichtungen auf, wobei an mindestens drei Seiten der Hubvorrichtung jeweils eine der mindestens drei Führungseinrichtungen angeordnet ist, und wobei an mindestens drei Führungseinrichtungen jeweils mindestens ein Wagen in die Vertikalrichtung beweglich geführt ist. Somit ist an mindestens drei Seiten der Hubvorrichtung jeweils ein Wagen angeordnet.

Erfindungsgemäß sind die mindestens drei Seiten der Hubvorrichtung parallel zu der Vertikalrichtung und geneigt zueinander orientiert, wobei je zwei Seiten einen Winkel zwischen sich einschließen. Dabei sind mindestens zwei der Winkel zwischen je zwei der drei Seiten von 90° verschieden. Vorzugsweise ist jeder der drei Winkel zwischen je zwei der drei Seiten von 90° verschieden.

Insbesondere weist die Hubvorrichtung also einen Querschnitt auf, welcher von einem Rechteck abweicht. Die Hubvorrichtung weist also eine Form auf, die von einem Quader verschieden ist. Insbesondere sind die Seiten der Hubvorrichtung, an denen die Führungseinrichtungen angeordnet sind, keine Seiten eines Quaders. Beispielsweise weist die Hubvorrichtung einen im Wesentlichen dreieckförmigen Querschnitt auf. Dabei können die drei Seiten mit entsprechenden Verlängerungen in Richtungen rechtwinklig zu der Vertikalrichtung einen dreieckförmigen Querschnitt bilden. Beispielsweise weist die Hubvorrichtung genau drei Seiten auf, wobei an jeder Seite genau eine Führungseinrichtung angeordnet ist, an welcher je ein Wagen geführt ist.

Dadurch, dass nur eine säulenartige Hubvorrichtung vorgesehen ist, um drei Komponenten der Palettiervorrichtung an je einem Wagen in die Vertikalrichtung zu bewegen, wird vorteilhaft Material, insbesondere in Form von Stahl, eingespart. Durch den im Wesentlichen dreieckförmigen Querschnitt der säulenartigen Hubvorrichtung wird auch der Platzbedarf für die Hubvorrichtung vorteilhaft verringert. Es hat sich gezeigt, dass mit einer Hubvorrichtung in Form eines Prismas mit im Wesentlichen dreieckförmigen Querschnitt ausreichend hohe Stabilität und Tragfestigkeit erreichbar sind.

Die Winkel zwischen den Seiten, an denen die Führungseinrichtungen angeordnet sind, liegen in einer Ebene, die von einer Längsrichtung und einer Querrichtung aufgespannt wird. Bei einer in Betrieb befindlichen Palettiervorrichtung verlaufen die Längsrichtung und die Querrichtung jeweils horizontal, also parallel zu einem Fußboden, auf dem die Palettiervorrichtung steht. Die Vertikalrichtung verläuft vertikal zu dem Fußboden und rechtwinklig zu der Längsrichtung sowie rechtwinklig zu der Querrichtung.

Gemäß einer bevorzugten Ausgestaltung der Erfindung liegt jeder der Winkel zwischen je zwei der Seiten, an denen die Führungseinrichtungen angeordnet sind, in einem Bereich zwischen 1° und 89°. Besonders bevorzugt liegt jeder der Winkel zwischen je zwei der Seiten, an denen die Führungseinrichtungen angeordnet sind, in einem Bereich zwischen 50° und 70°. Insbesondere kann die Hubvorrichtung einen Querschnitt in Form eines gleichseitigen Dreiecks aufweisen, wobei alle besagten Winkel 60° betragen.

Gemäß einer vorteilhaften Ausgestaltung der Erfindung ist jedem der Wagen, die an den Führungseinrichtungen beweglich geführt sind, ein separater Antrieb zur Bewegung in die Vertikalrichtung zugeordnet. Auch sind die Wagen vorteilhaft unabhängig voneinander in die Vertikalrichtung beweglich.

Erfindungsgemäß ist an einem ersten Wagen, der an einer ersten Seite der Hubvorrichtung angeordnet ist, eine Absetzvorrichtung befestigt und mit dem ersten Wagen in die Vertikalrichtung beweglich. Die Absetzvorrichtung definiert eine Transportfläche zum Transport einer Artikellage in die Längsrichtung. Die Absetzvorrichtung ist beispielsweise in Form eines Absetzbandes ausgestaltet und umfasst einen umlaufenden Fördergurt.

Vorzugsweise ist die Absetzvorrichtung dabei relativ zu dem ersten Wagen und somit auch relativ zu der Hubvorrichtung, zwischen einer ersten Längsposition und einer zweiten Längsposition in die Längsrichtung beweglich.

Gemäß einer weiteren vorteilhaften Weiterbildung der Erfindung ist an einem zweiten Wagen, der an einer zweiten Seite der Hubvorrichtung angeordnet ist, eine Komprimiervorrichtung befestigt und mit dem zweiten Wagen in die Vertikalrichtung beweglich. Die Komprimiervorrichtung dient dabei zum Ausrichten einer Artikellage, die sich auf der Transportfläche der Absetzvorrichtung befindet. Gemäß einer bevorzugten Ausgestaltung der Erfindung ist die Komprimiervorrichtung dabei an dem zweiten Wagen mittels eines zweiten Befestigungsarms befestigt, wobei der zweite Befestigungsarm eine von der ersten Seite definierte Ebene durchgreift. Die von der ersten Seite definierte Ebene erstreckt sich dabei in die Vertikalrichtung und in die Längsrichtung, wobei die erste Seite in dieser Ebene liegt. Die von der ersten Seite definierte Ebene erstreckt sich also rechtwinklig zu der Querrichtung.

Vorzugsweise weist die Komprimiervorrichtung mindestens einen frontseitigen Anschlag und einen rückseitigen Anschlag auf. Dabei ist, wenn sich die Absetzvorrichtung in der ersten Längsposition befindet, die Transportfläche der Absetzvorrichtung zu der Komprimiervorrichtung in die Längsrichtung versetzt angeordnet. Wenn sich die Absetzvorrichtung in der zweiten Längsposition befindet, so ist eine auf der Transportfläche der Absetzvorrichtung befindliche Artikellage in der Längsrichtung zwischen den besagten Anschlägen der Komprimiervorrichtung angeordnet.

Gemäß einer weiteren vorteilhaften Weiterbildung der Erfindung ist an einem dritten Wagen, der an einer dritten Seite der Hubvorrichtung angeordnet ist, eine Übergabevorrichtung befestigt und mit dem dritten Wagen in die Vertikalrichtung beweglich. Die Übergabevorrichtung definiert eine Förderfläche zum Transport einer Artikellage in die Längsrichtung. Die Übergabevorrichtung ist beispielsweise in Form eines Übergabebandes ausgestaltet und umfasst ein umlaufendes Förderband.

Gemäß einer bevorzugten Ausgestaltung der Erfindung ist die Übergabevorrichtung dabei an dem dritten Wagen mittels eines dritten Befestigungsarms befestigt, wobei der dritte Befestigungsarm eine von der ersten Seite definierte Ebene durchgreift. Die von der ersten Seite definierte Ebene erstreckt sich dabei in die Vertikalrichtung und in die Längsrichtung, wobei die erste Seite in dieser Ebene liegt. Die von der ersten Seite definierte Ebene erstreckt sich also rechtwinklig zu der Querrichtung.

Vorzugsweise ist, wenn sich die Absetzvorrichtung in der ersten Längsposition befindet, die Transportfläche der Absetzvorrichtung unmittelbar benachbart zu der Förderfläche der Übergabevorrichtung angeordnet, so dass eine auf der Förderfläche befindliche Artikellage in der Längsrichtung auf die Transportfläche transportierbar ist. Wenn sich die Absetzvorrichtung in der zweiten Längsposition befindet, so ist die Transportfläche der Absetzvorrichtung zu der Förderfläche der Übergabevorrichtung in die Längsrichtung versetzt angeordnet.

Es wird auch ein Verfahren zum Betrieb einer Palettiervorrichtung zum Absetzen einer Artikellage auf einem Transporthilfsmittel oder auf einem auf dem Transporthilfsmittel befindlichen Lagenstapel mit den Merkmalen des Anspruchs 14 vorgeschlagen. Die Palettiervorrichtung umfasst dabei eine Hubvorrichtung, welche mindestens drei separate Führungseinrichtungen aufweist, wobei an mindestens drei Führungseinrichtungen jeweils mindestens ein Wagen in eine Vertikalrichtung beweglich geführt ist. Bei der besagten Palettiervorrichtung handelt es sich um eine erfindungsgemäße Palettiervorrichtung, welche oben beschrieben ist.

Das erfindungsgemäße Verfahren zum Betrieb einer Palettiervorrichtung umfasst dabei die nachfolgend genannten Schritte.

Zunächst erfolgt ein Bewegen eines ersten Wagens, an welchem eine Absetzvorrichtung angeordnet ist, die eine Förderfläche zum Transport der Artikellage in die Längsrichtung definiert, in die Vertikalrichtung zu einer vorgegebenen Höhenposition. Diese Höhenposition ist derart bestimmt, dass die Transportfläche der Absetzvorrichtung sich geringfügig oberhalb des Transporthilfsmittels oder des auf dem Transporthilfsmittel befindlichen Lagenstapels befindet. Die Absetzvorrichtung ist beispielsweise in Form eines Absetzbandes ausgestaltet und umfasst einen umlaufenden Fördergurt.

Ebenso erfolgt ein Bewegen eines zweiten Wagens, an welchem eine Komprimiervorrichtung zum Ausrichten einer auf der Transportfläche der Absetzvorrichtung befindlichen Artikellage angeordnet ist, die mindestens einen frontseitigen Anschlag und einen rückseitigen Anschlag aufweist, in die Vertikalrichtung zu einer vorgegebenen Höhenposition. Diese Höhenposition ist derart bestimmt, dass die Komprimiervorrichtung sich oberhalb der Transportfläche der Absetzvorrichtung befindet.

Ferner erfolgt ein Fördern einer Artikellage auf eine Übergabevorrichtung, welche an einem dritten Wagen angebracht ist, und welche eine Förderfläche zum Transport der Artikellage in die Längsrichtung definiert. Die Übergabevorrichtung ist beispielsweise in Form eines Übergabebandes ausgestaltet und umfasst ein umlaufendes Förderband. Die Artikellage wird insbesondere von einer Zuführvorrichtung auf die Förderfläche der Übergabevorrichtung gefördert.

Anschließend erfolgt ein Bewegen des dritten Wagens zu einer vorgegebenen Höhenposition. Diese Höhenposition ist derart bestimmt, dass die Förderfläche der Übergabevorrichtung sich auf gleicher Höhe wie die Transportfläche der Absetzvorrichtung befindet.

Dann erfolgt ein Transportieren der Artikellage von der Förderfläche der Übergabevorrichtung auf die Transportfläche der Absetzvorrichtung, während die Absetzvorrichtung sich in einer ersten Längsposition befindet, in welcher die Absetzvorrichtung in der Längsrichtung unmittelbar benachbart zu der Übergabevorrichtung angeordnet ist.

Danach erfolgt ein Bewegen der Absetzvorrichtung relativ zu dem ersten Wagen in die Längsrichtung zu einer zweiten Längsposition, in der die auf der Transportfläche der Absetzvorrichtung befindliche Artikellage in der Längsrichtung zwischen den Anschlägen der Komprimiervorrichtung angeordnet ist.

Beispielsweise befindet sich die Komprimiervorrichtung zu diesem Zeitpunkt in einer Höhenposition, in welcher die beiden Anschläge der Komprimiervorrichtung sich oberhalb der auf der Transportfläche der Absetzvorrichtung befindlichen Artikellage befinden. In diesem Fall wird die Komprimiervorrichtung nun in Vertikalrichtung nach unten bewegt, bis die auf der Transportfläche befindliche Artikellage sich in Vertikalrichtung auf Höhe der Anschläge befindet.

Alternativ befindet sich die Komprimiervorrichtung zu diesem Zeitpunkt in einer Höhenposition, in welcher der frontseitige Anschlag der Komprimiervorrichtung sich bereits auf Höhe der auf der Transportfläche der Absetzvorrichtung befindlichen Artikellage befindet. In diesem Fall wird der rückseitige Anschlag der Komprimiervorrichtung von einer Warteposition, in welcher der rückseitige Anschlag sich in Vertikalrichtung oberhalb der Artikellage befindet, in eine Arbeitsposition bewegt, in welcher der rückseitige Anschlag sich in der Vertikalrichtung auf Höhe der Artikellage befindet.

Die auf der Transportfläche der Absetzvorrichtung befindliche Artikellage befindet sich nunmehr in der Längsrichtung zwischen den Anschlägen und in der Vertikalrichtung auf Höhe der Anschläge. Nun erfolgt ein Bewegen der Absetzvorrichtung relativ zu dem ersten Wagen in die Längsrichtung zurück zu der ersten Längsposition. Dabei wird die Artikellage auf dem Transporthilfsmittel oder auf dem auf dem Transporthilfsmittel befindlichen Lagenstapel abgesetzt.

Wenn die Absetzvorrichtung einen umlaufenden Fördergurt aufweist, so kann die Bewegung der Absetzvorrichtung relativ zu dem ersten Wagen in die Längsrichtung zu der ersten Längsposition mit dem Umlauf des Fördergurts derart synchronisiert sein, dass die Absetzvorrichtung unter der Artikellage heraus fährt.

### Figuren und Ausführungsformen der Erfindung

Im Folgenden ist die Erfindung anhand eines in den Figuren dargestellten vorteilhaften Ausführungsbeispiels näher erläutert. Die Erfindung ist jedoch nicht auf dieses Ausführungsbeispiel beschränkt. Die Figuren stellen den Gegenstand der Erfindung nur schematisch dar. Es zeigen:
- Figur 1: eine Draufsicht auf eine Palettiervorrichtung,
- Figur 2: eine vergrößerte Darstellung eines Teilbereichs aus Figur 1,
- Figur 3: eine schematische Frontansicht der Palettiervorrichtung aus Figur 1,
- Figur 4: eine weitere schematische Frontansicht der Palettiervorrichtung aus Figur 1 und
- Figur 5: noch eine weitere schematische Frontansicht der Palettiervorrichtung aus Figur 1.

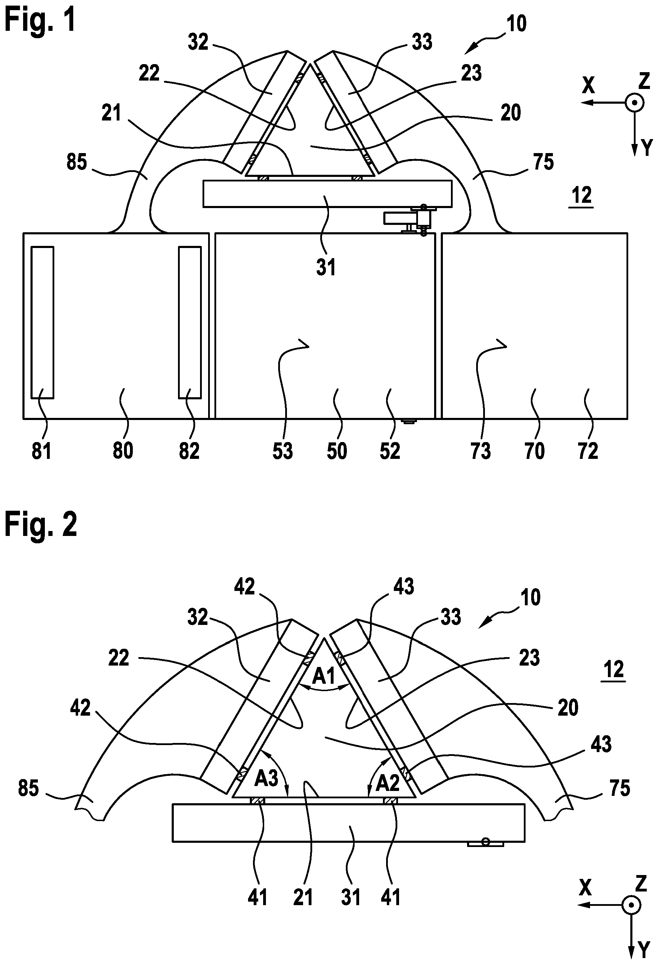

Figur 1 zeigt eine schematische Draufsicht auf eine Palettiervorrichtung 10. Die Palettiervorrichtung 10 steht auf einem Fußboden 12 und dient zum Absetzen von Gütern, insbesondere von hier nicht dargestellten Artikellagen 15, auf einem hier nicht dargestellten Lagenstapel 100, welcher sich auf einem hier nicht dargestellten Transporthilfsmittel 105 befindet.

Die Palettiervorrichtung 10 umfasst eine Hubvorrichtung 20, welche sich im Wesentlichen in eine Vertikalrichtung Z von dem Fußboden 12 weg erstreckt. Die Vertikalrichtung Z verläuft rechtwinklig zu dem Fußboden 12 und rechtwinklig zu einer Längsrichtung X. Eine Querrichtung Y erstreckt sich rechtwinklig zu der Vertikalrichtung Z und rechtwinklig zu der Längsrichtung X.

Die Hubvorrichtung 20 ist in Form einer Säule ausgebildet und weist vorliegend drei Seiten, nämlich eine erste Seite 21, eine zweite Seite 22 und eine dritte Seite 23 auf. Die Hubvorrichtung 20 ist dabei als ein gerades Prisma ausgestaltet und weist einen dreieckförmigen Querschnitt auf. Die erste Seite 21 der Hubvorrichtung 20 definiert eine Ebene, welche sich in die Vertikalrichtung Z und in die Längsrichtung X erstreckt, wobei die erste Seite 21 in dieser Ebene liegt. Die von der ersten Seite 21 definierte Ebene erstreckt sich also rechtwinklig zu der Querrichtung Y.

An der ersten Seite 21 der Hubvorrichtung 20 ist eine erste Führungseinrichtung 41 angeordnet. An der ersten Führungseinrichtung 41 ist ein erster Wagen 31 in die Vertikalrichtung Z beweglich geführt. An der zweiten Seite 22 ist eine zweite Führungseinrichtung 42 angeordnet. An der zweiten Führungseinrichtung 42 ist ein zweiter Wagen 32 in die Vertikalrichtung Z beweglich geführt. An der dritten Seite 23 ist eine dritte Führungseinrichtung 43 angeordnet. An der dritten Führungseinrichtung 43 ist ein dritter Wagen 33 in die Vertikalrichtung Z beweglich geführt.

Die Führungseinrichtungen 41, 42, 43 sind beispielsweis in Form von je zwei voneinander beabstandeten Führungsschienen, die sich in die Vertikalrichtung z erstrecken, ausgebildet. Jedem der Wagen 31, 32, 33, die an den Führungseinrichtungen 41, 42, 43 beweglich geführt sind, ist jeweils ein hier nicht dargestellter separater Antrieb zur Bewegung in die Vertikalrichtung Z zugeordnet. Insbesondere sind die Wagen 31, 32, 33 unabhängig voneinander in die Vertikalrichtung Z beweglich.

An dem ersten Wagen 31 ist eine Absetzvorrichtung 50 befestigt. Die Absetzvorrichtung 50 ist mit dem ersten Wagen 31 in die Vertikalrichtung Z relativ zu der Hubvorrichtung 20 beweglich. Die Absetzvorrichtung 50 ist zusätzlich in die Längsrichtung X zwischen einer ersten Längsposition und einer zweiten Längsposition relativ zu dem ersten Wagen 31 und relativ zu der Hubvorrichtung 20 beweglich. In der hier gezeigten Darstellung befindet sich die Absetzvorrichtung 50 in der ersten Längsposition.

Die Absetzvorrichtung 50 ist in Form eines Absetzbandes ausgestaltet und umfasst einen umlaufenden Fördergurt 52, der eine Transportfläche 53 zum Transport einer Artikellage 15 in die Längsrichtung X definiert. Die Transportfläche 53 erstreckt sich in einer Ebene, welche durch die Längsrichtung X und die Querrichtung Y definiert ist. Die Vertikalrichtung Z verläuft somit rechtwinklig zu der Transportfläche 53.

An dem zweiten Wagen 32 ist eine Komprimiervorrichtung 80 befestigt. Die Komprimiervorrichtung 80 ist mit dem zweiten Wagen 32 in die Vertikalrichtung Z relativ zu der Hubvorrichtung 20 beweglich. Die Komprimiervorrichtung 80 dient zum Ausrichten einer Artikellage 15, die sich auf der Transportfläche 53 der Absetzvorrichtung 50 befindet. Die Komprimiervorrichtung 80 ist an dem zweiten Wagen 32 mittels eines zweiten Befestigungsarms 85 befestigt. Der zweite Befestigungsarm 85 durchgreift die von der ersten Seite 21 der Hubvorrichtung 20 definierte Ebene.

Die Komprimiervorrichtung 80 weist einen frontseitigen Anschlag 81 und einen rückseitigen Anschlag 82 auf. Dabei ist, wenn sich die Absetzvorrichtung 50 in der ersten Längsposition befindet, die Transportfläche 53 der Absetzvorrichtung 50 zu der Komprimiervorrichtung 80 in die Längsrichtung X versetzt angeordnet. Wenn sich die Absetzvorrichtung 50 in der zweiten Längsposition befindet, so ist eine auf der Transportfläche 53 der Absetzvorrichtung 50 befindliche Artikellage 15 in der Längsrichtung zwischen den beiden Anschlägen 81, 82 der Komprimiervorrichtung 80 angeordnet.

An dem dritten Wagen 33 ist eine Übergabevorrichtung 70 befestigt. Die Übergabevorrichtung 70 ist mit dem dritten Wagen 33 in die Vertikalrichtung Z relativ zu der Hubvorrichtung 20 beweglich. Die Übergabevorrichtung 70 ist dabei an dem dritten Wagen 33 mittels eines dritten Befestigungsarms 75 befestigt. Der dritte Befestigungsarm 75 durchgreift die von der ersten Seite 21 der Hubvorrichtung 20 definierte Ebene.

Die Übergabevorrichtung 70 ist in Form eines Übergabebandes ausgestaltet und umfasst ein umlaufendes Förderband 72, das eine Förderfläche 73 zum Transport einer Artikellage 15 in die Längsrichtung X definiert. Die Förderfläche 73 erstreckt sich in einer Ebene, welche durch die Längsrichtung X und die Querrichtung Y definiert ist. Die Vertikalrichtung Z verläuft somit rechtwinklig zu der Förderfläche 73.

Wenn sich die Absetzvorrichtung 50 in der ersten Längsposition befindet, so ist die Transportfläche 53 der Absetzvorrichtung 50 unmittelbar benachbart zu der Förderfläche 73 der Übergabevorrichtung 70 angeordnet, so dass eine auf der Förderfläche 73 befindliche Artikellage 15 in der Längsrichtung X auf die Transportfläche 53 transportierbar ist. Wenn sich die Absetzvorrichtung 50 in der zweiten Längsposition befindet, so ist die Transportfläche 53 der Absetzvorrichtung 50 zu der Förderfläche 73 der Übergabevorrichtung 70 in die Längsrichtung X versetzt angeordnet.

Der erste Wagen 31, der zweite Wagen 32 und der dritte Wagen 33 sind derart ausgestaltet und an den Seiten 21, 22, 23 der Hubvorrichtung 20 angeordnet, dass eine kollisionsfreie Bewegung der Wagen 31, 32, 33 an den Führungseinrichtungen 41, 42, 43 in die Vertikalrichtung Z ermöglicht ist. Auch eine Kollision der Wagen 31, 32, 33 mit einem der Befestigungsarme 75, 85 ist vermieden.

Solange sich die Absetzvorrichtung 50 in der ersten Längsposition befindet ist auch eine Kollision der Absetzvorrichtung 50, der Übergabevorrichtung 70 sowie der Komprimiervorrichtung 80 miteinander oder mit einem der Wagen 31, 32, 33 oder einem der Befestigungsarme 75, 85 vermieden. Wenn sich die Absetzvorrichtung 50 in der zweiten Längsposition befindet, so ist eine Kollision der Absetzvorrichtung 50 mit der Komprimiervorrichtung 80 möglich.

Figur 2 zeigt eine vergrößerte Darstellung eines Teilbereichs aus Figur 1. Die drei Seiten 21, 22, 23 der Hubvorrichtung 20 erstrecken sich jeweils parallel zu der Vertikalrichtung Z und sind geneigt zueinander orientiert. Die zweite Seite 22 und die dritte Seite 23 schließen einen ersten Winkel A1 zwischen sich ein. Die dritte Seite 23 und die erste Seite 21 schließen einen zweiten Winkel A2 zwischen sich ein. Die erste Seite 21 und die zweite Seite 22 schließen einen dritten Winkel A3 zwischen sich ein. Die Winkel A1, A2, A3 zwischen den Seiten 21, 22, 23 liegen dabei in einer Ebene, die von der Längsrichtung X und der Querrichtung Y aufgespannt wird.

Vorliegend weist die Hubvorrichtung 20 einen Querschnitt in Form eines gleichseitigen Dreiecks auf. Somit betragen alle Winkel A1, A2, A3 zwischen den Seiten 21, 22, 23 genau 60°. Die Hubvorrichtung 20 kann aber auch einen anderen Querschnitt aufweisen. Die Winkel A1, A2, A3 zwischen den drei Seiten 21, 22, 23, an denen die Führungseinrichtungen 41, 42, 43 angeordnet sind, können in einem Bereich zwischen 1° und 89° liegen. Bevorzugt liegt jeder der Winkel A1, A2, A3 in einem Bereich zwischen 50° und 70°.

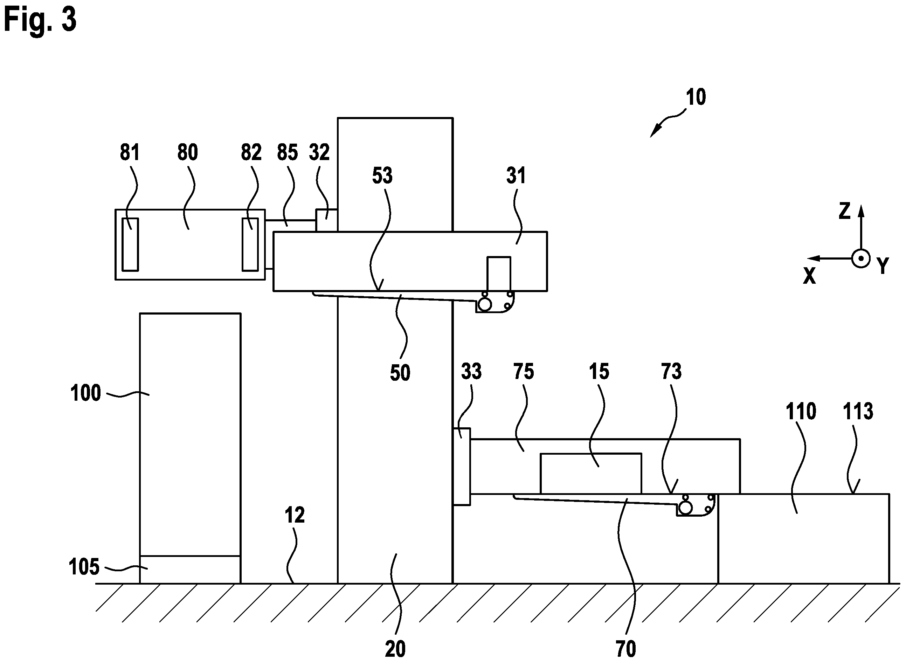

Figur 3 zeigt eine schematische Frontansicht der Palettiervorrichtung 10 aus Figur 1. Die Artikellagen 15 werden der Palettiervorrichtung 10 von einer Zuführvorrichtung 110 zugeführt. Dabei werden zunächst einzelne Güter von der Zuführvorrichtung 110 zu einer stapelfähigen Artikellage 15 zusammengefasst, und die so erstellte Artikellage 15 wird anschließend in die Längsrichtung X weiter zu der Palettiervorrichtung 10 transportiert. Die Artikellage 15 wird von der Palettiervorrichtung 10 auf dem Lagenstapel 100 abgesetzt, der sich bereits auf dem Transporthilfsmittel 105 befindet. Das Transporthilfsmittel 105 ist beispielsweise eine Palette und befindet sich in der Vertikalrichtung Z unter der Komprimiervorrichtung 80. Mehrere Artikellagen 15 bilden auf dem Transporthilfsmittel 105 den Lagenstapel 100. Die Artikellage 15 wird dabei von der Zuführvorrichtung 110 zunächst auf die Förderfläche 73 der Übergabevorrichtung 70 gefördert.

In der hier gezeigten Darstellung befindet sich die Übergabevorrichtung 70 in Vertikalrichtung Z in einer derartigen Höhenposition, dass die Förderfläche 73 mit einer Zuführfläche 113 der Zuführvorrichtung 110 fluchtet. Die Artikellage 15 befindet sich bereits auf der Förderfläche 73 der Übergabevorrichtung 70. Die Absetzvorrichtung 50 befindet sich in der ersten Längsposition. Die Absetzvorrichtung 50 befindet sich in einer derartigen Höhenposition, dass der Fördergurt 52 sich geringfügig oberhalb des auf dem Transporthilfsmittel 105 befindlichen Lagenstapels 100 befindet. Die Komprimiervorrichtung 80 befindet sich in einer Höhenposition oberhalb des Fördergurts der Absetzvorrichtung 50.

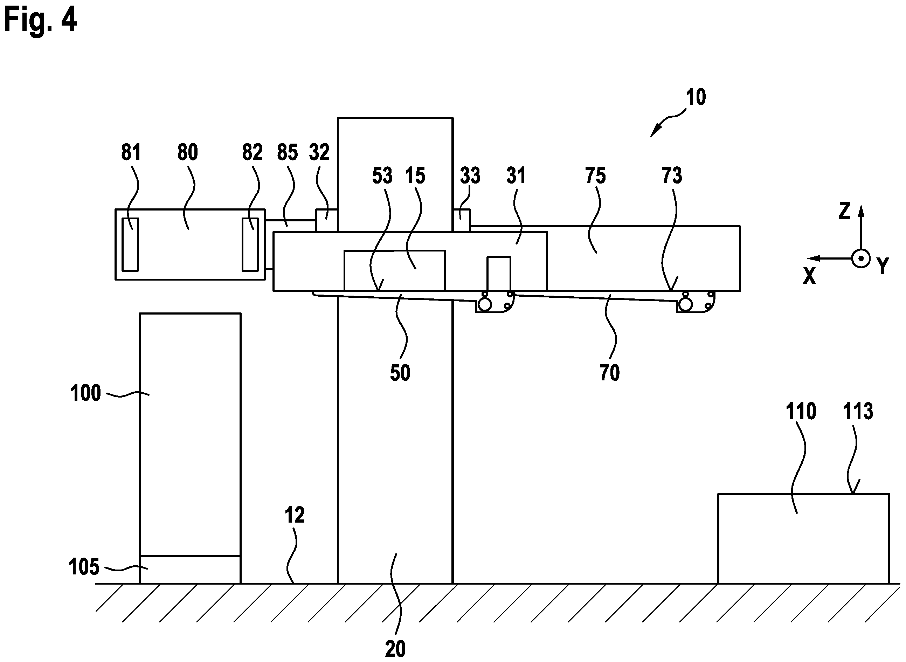

Figur 4 zeigt eine weitere schematische Frontansicht der Palettiervorrichtung 10 aus Figur 1. Ausgehend von der Situation in Figur 3 wird nun der dritte Wagen 33 mit der Übergabevorrichtung 70 zu einer derartigen Höhenposition bewegt, dass die Förderfläche 73 mit der Transportfläche 53 der Absetzvorrichtung 50 fluchtet. Dann wird die Artikellage 15 von der Förderfläche 73 auf die Transportfläche 53 transportiert.

In der hier gezeigten Darstellung befindet sich die Übergabevorrichtung 70 in Vertikalrichtung Z in einer derartigen Höhenposition, dass die Förderfläche 73 mit der Transportfläche 53 der Absetzvorrichtung 50 fluchtet. Die Artikellage 15 befindet sich auf der Transportfläche 53 der Absetzvorrichtung 50. Die Absetzvorrichtung 50 befindet sich in der ersten Längsposition. Die Absetzvorrichtung 50 befindet sich in einer derartigen Höhenposition, dass der Fördergurt 52 sich geringfügig oberhalb des auf dem Transporthilfsmittel 105 befindlichen Lagenstapels 100 befindet. Die Komprimiervorrichtung 80 befindet sich in einer Höhenposition oberhalb des Fördergurts 52 der Absetzvorrichtung 50.

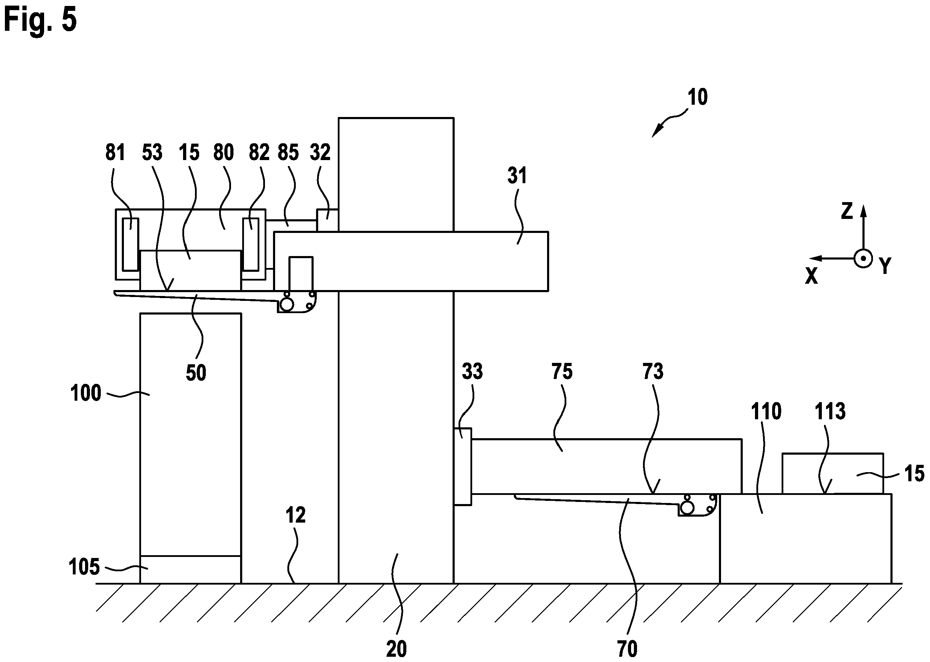

Figur 5 zeigt noch eine weitere schematische Frontansicht der Palettiervorrichtung 10 aus Figur 1. Ausgehend von der Situation in Figur 4 wird nun die Absetzvorrichtung 50 mit der Artikellage 15 in die zweite Längsposition bewegt. In der zweiten Längsposition ist die Transportfläche 53 der Absetzvorrichtung 50 direkt unter der Komprimiervorrichtung 80 angeordnet. Ebenso wird der dritte Wagen 33 mit der Übergabevorrichtung 70 zu der Höhenposition bewegt, in welcher die Förderfläche 73 mit der Zuführfläche 113 der Zuführvorrichtung 110 fluchtet.

Die Komprimiervorrichtung 80 kann sich dabei in einer Höhenposition befinden, in welcher die beiden Anschläge 81, 82 sich oberhalb der Artikellage 15 befinden. In diesem Fall wird die Komprimiervorrichtung 80, nachdem die Absetzvorrichtung 50 die zweite Längsposition erreicht hat, in Vertikalrichtung Z nach unten bewegt, bis die Artikellage 15 sich in Vertikalrichtung Z auf Höhe der beiden Anschläge 81, 82 befindet.

Die Komprimiervorrichtung 80 kann sich auch in einer Höhenposition befinden, in welcher der frontseitige Anschlag 81 sich bereits auf Höhe der Artikellage 15 befindet. In diesem Fall befindet sich der rückseitige Anschlag 82 in einer Warteposition, in welcher der rückseitige Anschlag 82 sich in Vertikalrichtung Z oberhalb der Artikellage 15 befindet. In diesem Fall wird der rückseitige Anschlag 82, nachdem die Absetzvorrichtung 50 die zweite Längsposition erreicht hat, in eine Arbeitsposition bewegt, in welcher der rückseitige Anschlag 82 sich in der Vertikalrichtung Z auf Höhe der Artikellage 15 befindet,

In der hier gezeigten Darstellung befindet sich die Übergabevorrichtung 70 in Vertikalrichtung Z in einer derartigen Höhenposition, dass die Förderfläche 73 mit der Zuführfläche 113 der Zuführvorrichtung 110 fluchtet. Auf der Zuführfläche 113 der Zuführvorrichtung 110 befindet sich bereits eine weitere Artikellage 15, die auf die Förderfläche 73 gefördert wird.

Die Absetzvorrichtung 50 befindet sich in der zweiten Längsposition. Die Absetzvorrichtung 50 befindet sich in einer derartigen Höhenposition, dass der Fördergurt 52 sich geringfügig oberhalb des auf dem Transporthilfsmittel 105 befindlichen Lagenstapels 100 befindet. Die Komprimiervorrichtung 80 befindet sich in einer Höhenposition oberhalb des Fördergurts 52 der Absetzvorrichtung 50.

Die Artikellage 15 befindet sich auf der Transportfläche 53 der Absetzvorrichtung 50 und ragt in die Komprimiervorrichtung 80 hinein. Die Artikellage 15 befindet sich in der Längsrichtung X zwischen den Anschlägen 81, 82 der Komprimiervorrichtung 80 und in der Vertikalrichtung Z auf Höhe der Anschläge 81, 82.

Nun erfolgt ein Bewegen der Absetzvorrichtung 50 in die Längsrichtung X zurück zu der ersten Längsposition. Die Bewegung der Absetzvorrichtung 50 in die Längsrichtung X zu der ersten Längsposition und der Umlauf des Fördergurts 52 sind dabei derart synchronisiert, dass die Absetzvorrichtung 50 unter der Artikellage 15 heraus fährt. Dadurch wird die Artikellage 15 auf dem auf dem Transporthilfsmittel 105 befindlichen Lagenstapel 100 abgesetzt. Der Lagenstapel 100 wird dadurch um die Höhe der Artikellage 15 höher.

Anschließend werden der erste Wagen 31 mit der Absetzvorrichtung 50 sowie der zweite Wagen 32 mit der Komprimiervorrichtung 80 in der Vertikalrichtung Z um die Höhe der Artikellage 15 nach oben in die zu Figur 3 beschriebene Höhenposition bewegt. Die auf der Zuführfläche 113 der Zuführvorrichtung 110 befindliche weitere Artikellage 15 wird zu der Palettiervorrichtung 10 transportiert und auf die Förderfläche 73 der Übergabevorrichtung 70 gefördert, wie in Figur 3 dargestellt.

Wenn der Lagenstapel 100 eine bestimmte Menge an Artikellagen 15 umfasst und eine bestimmte Höhe aufweist wird der Lagenstapel 100 zusammen mit dem Transporthilfsmittel 105 entfernt. Ein weiteres Transporthilfsmittel 105, beispielsweise eine Palette, wird unter der Komprimiervorrichtung 80 angeordnet, und auf dem weiteren Transporthilfsmittel 105 werden weitere Artikellagen 15 abgesetzt und gestapelt, wodurch ein weiterer Lagenstapel 100 gebildet wird.

Die Erfindung ist nicht auf die hier beschriebenen Ausführungsbeispiele beschränkt. Vielmehr ist innerhalb des durch die Ansprüche angegebenen Bereichs eine Vielzahl von Abwandlungen möglich, die im Rahmen fachmännischen Handelns liegen.

### Bezugszeichenliste

- 10: Palettiervorrichtung
- 12: Fußboden
- 15: Artikellage
- 20: Hubvorrichtung
- 21: erste Seite
- 22: zweite Seite
- 23: dritte Seite
- 31: erster Wagen
- 32: zweiter Wagen
- 33: dritter Wagen
- 41: erste Führungseinrichtung
- 42: zweite Führungseinrichtung
- 43: dritte Führungseinrichtung
- 50: Absetzvorrichtung
- 52: Fördergurt
- 53: Transportfläche
- 70: Übergabevorrichtung
- 72: Förderband
- 73: Förderfläche
- 75: dritter Befestigungsarm
- 80: Komprimiervorrichtung
- 81: frontseitiger Anschlag
- 82: rückseitiger Anschlag
- 85: zweiter Befestigungsarm
- 100: Lagenstapel
- 105: Transporthilfsmittel
- 110: Zuführvorrichtung
- 113: Zuführfläche
- X: Längsrichtung
- Y: Querrichtung
- Z: Vertikalrichtung
- A1: erster Winkel
- A2: zweiter Winkel
- A3: dritter Winkel

## Patentansprüche

1. Palettiervorrichtung (10) zum Absetzen von Artikellagen (15) auf einem Transporthilfsmittel (105), umfassend eine Hubvorrichtung (20),
welche in Form einer Säule ausgebildet ist und mindestens drei Seiten (21, 22, 23) aufweist, und
welche mindestens drei separate Führungseinrichtungen (41, 42, 43) aufweist, wobei
an mindestens drei Seiten (21, 22, 23) jeweils eine der mindestens drei Führungseinrichtungen (41, 42, 43) angeordnet ist, und wobei
an mindestens drei Führungseinrichtungen (41, 42, 43) jeweils mindestens ein Wagen (31, 32, 33) in eine Vertikalrichtung (Z) beweglich geführt ist, wobei an einem ersten Wagen (31), der an einer ersten Seite (21) angeordnet ist, eine Absetzvorrichtung (50) befestigt ist, die eine Transportfläche (53) zum Transport einer Artikellage (15) in eine Längsrichtung (X) definiert,
**dadurch gekennzeichnet, dass**
die mindestens drei Seiten (21, 22, 23) parallel zu der Vertikalrichtung (Z) und geneigt zueinander orientiert sind, wobei
mindestens zwei der Winkel (A1, A2, A3) zwischen je zwei der drei Seiten (21, 22, 23) von 90° verschieden sind.

2. Palettiervorrichtung (10) nach Anspruch 1, **dadurch gekennzeichnet, dass**
jeder der Winkel (A1, A2, A3) zwischen je zwei der Seiten (21, 22, 23) in einem Bereich zwischen 1° und 89°, vorzugsweise zwischen 50° und 70°, liegt.

3. Palettiervorrichtung (10) nach einem der vorstehenden Ansprüche, **dadurch gekennzeichnet, dass**
jedem der Wagen (31, 32, 33) ein separater Antrieb zur Bewegung in die Vertikalrichtung (Z) zugeordnet ist.

4. Palettiervorrichtung (10) nach einem der vorstehenden Ansprüche, **dadurch gekennzeichnet, dass**
die Wagen (31, 32, 33) unabhängig voneinander in die Vertikalrichtung (Z) beweglich sind.

5. Palettiervorrichtung (10) nach Anspruch 1, **dadurch gekennzeichnet, dass**
die Absetzvorrichtung (50) in Form eines Absetzbandes ausgestaltet ist und einen umlaufenden Fördergurt (52) umfasst.

6. Palettiervorrichtung (10) nach einem der Ansprüche 1 bis 5, **dadurch gekennzeichnet, dass**
die Absetzvorrichtung (50) relativ zu dem ersten Wagen (31) zwischen einer ersten Längsposition und einer zweiten Längsposition in die Längsrichtung (X) beweglich ist.

7. Palettiervorrichtung (10) nach einem der Ansprüche 1 bis 6, **dadurch gekennzeichnet, dass**
an einem zweiten Wagen (32), der an einer zweiten Seite (22) angeordnet ist, eine Komprimiervorrichtung (80) zum Ausrichten einer Artikellage (15) befestigt ist.

8. Palettiervorrichtung (10) nach Anspruch 7, **dadurch gekennzeichnet, dass**
die Komprimiervorrichtung (80) an dem zweiten Wagen (32) mittels eines zweiten Befestigungsarms (85) befestigt ist,
welcher eine von der ersten Seite (21) definierte Ebene durchgreift.

9. Palettiervorrichtung (10) nach einem der Ansprüche 7 bis 8, **dadurch gekennzeichnet, dass**
die Komprimiervorrichtung (80) mindestens einen frontseitigen Anschlag (81) und einen rückseitigen Anschlag (82) aufweist, wobei
die Transportfläche (53) der Absetzvorrichtung (50) zu der Komprimiervorrichtung (80) in die Längsrichtung (X) versetzt angeordnet ist, wenn sich die Absetzvorrichtung (50) in einer ersten Längsposition befindet, und wobei
eine auf der Transportfläche (53) befindliche Artikellage (15) in der Längsrichtung (X) zwischen den Anschlägen (81, 82) angeordnet ist,
wenn sich die Absetzvorrichtung (50) in einer zweiten Längsposition befindet.

10. Palettiervorrichtung (10) nach einem der Ansprüche 1 bis 9, **dadurch gekennzeichnet, dass**
an einem dritten Wagen (33), der an einer dritten Seite (23) angeordnet ist, eine Übergabevorrichtung (70) befestigt ist,
die eine Förderfläche (73) zum Transport einer Artikellage (15) in die Längsrichtung (X) definiert.

11. Palettiervorrichtung (10) nach Anspruch 10, **dadurch gekennzeichnet, dass**
die Übergabevorrichtung (70) in Form eines Übergabebandes ausgestaltet ist und ein umlaufendes Förderband (72) umfasst.

12. Palettiervorrichtung (10) nach einem der Ansprüche 10 bis 11, **dadurch gekennzeichnet, dass**
die Übergabevorrichtung (70) an dem dritten Wagen (33) mittels eines dritten Befestigungsarms (75) befestigt ist,
welcher eine von der ersten Seite (21) definierte Ebene durchgreift.

13. Palettiervorrichtung (10) nach einem der Ansprüche 11 bis 12, **dadurch gekennzeichnet, dass**
die Transportfläche (53) der Absetzvorrichtung (50) unmittelbar benachbart zu der Förderfläche (73) der Übergabevorrichtung (70) angeordnet ist, so dass
eine auf der Förderfläche (73) befindliche Artikellage (15) in der Längsrichtung (X) auf die Transportfläche (53) transportierbar ist,
wenn sich die Absetzvorrichtung (50) in der ersten Längsposition befindet, und dass
die Transportfläche (53) der Absetzvorrichtung (50) zu der Förderfläche (73) der Übergabevorrichtung (70) in die Längsrichtung (X) versetzt angeordnet ist,
wenn sich die Absetzvorrichtung (50) in der zweiten Längsposition befindet.

14. Verfahren zum Betrieb einer Palettiervorrichtung (10) zum Absetzen einer Artikellage (15) auf einem Transporthilfsmittel (105) gemäß einem der Ansprüche 1 bis 6, umfassend folgende Schritte:
- Bewegen des ersten Wagens (31), an welchem die Absetzvorrichtung (50) angeordnet ist, in die Vertikalrichtung (Z) zu einer vorgegebenen Höhenposition;
- Bewegen eines zweiten Wagens (32), an welchem eine Komprimiervorrichtung (80) zum Ausrichten der Artikellage (15) angeordnet ist, die mindestens einen frontseitigen Anschlag (81) und einen rückseitigen Anschlag (82) aufweist, in die Vertikalrichtung (Z) zu einer vorgegebenen Höhenposition;
- Fördern der Artikellage (15) auf eine Übergabevorrichtung (70), welche an einem dritten Wagen (33) angebracht ist;
- Bewegen des dritten Wagens (33) zu einer vorgegebenen Höhenposition;
- Transportieren der Artikellage (15) von der Übergabevorrichtung (70) auf die Absetzvorrichtung (50), während die Absetzvorrichtung (50) sich in einer ersten Längsposition befindet, in der die Absetzvorrichtung (50) in der Längsrichtung (X) unmittelbar benachbart zu der Übergabevorrichtung (70) angeordnet ist,
- Bewegen der Absetzvorrichtung (50) relativ zu dem ersten Wagen (31) in die Längsrichtung (X) zu einer zweiten Längsposition, in der die Artikellage (15) in der Längsrichtung (X) zwischen den Anschlägen (81, 82) angeordnet ist,
- Bewegen der Absetzvorrichtung (50) relativ zu dem ersten Wagen (31) in die Längsrichtung (X) zu der ersten Längsposition, wodurch die Artikellage (15) auf dem Transporthilfsmittel (105) oder auf einem auf dem Transporthilfsmittel (105) befindlichen Lagenstapel (100) abgesetzt wird.

## Claims

1. Palletizing apparatus (10) for setting down article layers (15) on a transport auxiliary aid (105), comprising a lifting apparatus (20)
which is in the form of a column and has at least three sides (21, 22, 23), and
which has at least three separate guide devices (41, 42, 43), wherein,
on at least three sides (21, 22, 23), in each case one of the at least three guide devices (41, 42, 43) is arranged, and wherein,
on at least three guide devices (41, 42, 43), in each case at least one carriage (31, 32, 33) is guided so as to be movable in a vertical direction (Z), wherein, fastened to a first carriage (31), which is arranged on a first side (21), is a set-down apparatus (50) which defines a transport surface (53) for transporting an article layer (15) in a longitudinal direction (X),
**characterized in that**
the at least three sides (21, 22, 23) are oriented parallel to the vertical direction (Z) and inclined to one another, wherein
at least two of the angles (A1, A2, A3) between in each case two of the three sides (21, 22, 23) are different from 90°.

2. Palletizing apparatus (10) according to Claim 1,
**characterized in that**
each of the angles (A1, A2, A3) between in each case two of the sides (21, 22, 23) lies in a range between 1° and 89°, preferably between 50° and 70°.

3. Palletizing apparatus (10) according to either of the preceding claims, **characterized in that**
each of the carriages (31, 32, 33) is assigned a separate drive for movement in the vertical direction (Z).

4. Palletizing apparatus (10) according to one of the preceding claims, **characterized in that**
the carriages (31, 32, 33) are movable in the vertical direction (Z) independently of one another.

5. Palletizing apparatus (10) according to Claim 1, **characterized in that**
the set-down apparatus (50) is in the form of a set-down band and comprises a circulating conveyor belt (52) .

6. Palletizing apparatus (10) according to one of Claims 1 to 5, **characterized in that**
the set-down apparatus (50) is movable relative to the first carriage (31) in the longitudinal direction (X) between a first longitudinal position and a second longitudinal position.

7. Palletizing apparatus (10) according to one of Claims 1 to 6, **characterized in that**,
fastened to a second carriage (32), which is arranged on a second side (22), is a compressing apparatus (80) for orienting an article layer (15).

8. Palletizing apparatus (10) according to Claim 7, **characterized in that**
the compressing apparatus (80) is fastened to the second carriage (32) by means of a second fastening arm (85)
which passes through a plane defined by the first side (21) .

9. Palletizing apparatus (10) according to either of Claims 7 and 8, **characterized in that**
the compressing apparatus (80) has at least one front stop (81) and one rear stop (82), wherein
the transport surface (53) of the set-down apparatus (50) is arranged offset from the compressing apparatus (80) in the longitudinal direction (X)
when the set-down apparatus (50) is in a first longitudinal position, and wherein
an article layer (15) situated on the transport surface (53) is arranged between the stops (81, 82) in the longitudinal direction (X)
when the set-down apparatus (50) is in a second longitudinal position.

10. Palletizing apparatus (10) according to one of Claims 1 to 9, **characterized in that**,
fastened to a third carriage (33), which is arranged on a third side (23), is a transfer apparatus (70)
which defines a conveying surface (73) for transporting an article layer (15) in the longitudinal direction (X).

11. Palletizing apparatus (10) according to Claim 10, **characterized in that**
the transfer apparatus (70) is in the form of a transfer band and comprises a circulating conveyor band (72).

12. Palletizing apparatus (10) according to either of Claims 10 and 11, **characterized in that**
the transfer apparatus (70) is fastened to the third carriage (33) by means of a third fastening arm (75) which passes through a plane defined by the first side (21).

13. Palletizing apparatus (10) according to either of Claims 11 and 12, **characterized in that**
the transport surface (53) of the set-down apparatus (50) is arranged directly adjacent to the conveying surface (73) of the transfer apparatus (70), so that an article layer (15) situated on the conveying surface (73) is able to be transported onto the transport surface (53) in the longitudinal direction (X),
when the set-down apparatus (50) is in the first longitudinal position, and **in that**
the transport surface (53) of the set-down apparatus (50) is arranged offset from the conveying surface (73) of the transfer apparatus (70) in the longitudinal direction (X)
when the set-down apparatus (50) is in the second longitudinal position.

14. Method for operating a palletizing apparatus (10) for setting down an article layer (15) on a transport auxiliary aid (105) according to one of Claims 1 to 6, comprising the following steps:
- moving the first carriage (31), on which the set-down apparatus (50) is arranged, in the vertical direction (Z) to a predefined height position;
- moving a second carriage (32), on which a compressing apparatus (80), having at least one front stop (81) and one rear stop (82), for orienting the article layer (15) is arranged, in the vertical direction (Z) to a predefined height position;
- conveying the article layer (15) onto a transfer apparatus (70) which is attached to a third carriage (33) ;
- moving the third carriage (33) to a predefined height position;
- transporting the article layer (15) from the transfer apparatus (70) onto the set-down apparatus (50) while the set-down apparatus (50) is in a first longitudinal position, in which the set-down apparatus (50) is arranged directly adjacent to the transfer apparatus (70) in the longitudinal direction (X),
- moving the set-down apparatus (50) relative to the first carriage (31) in the longitudinal direction (X) to a second longitudinal position, in which the article layer (15) is arranged between the stops (81, 82) in the longitudinal direction (X),
- moving the set-down apparatus (50) relative to the first carriage (31) in the longitudinal direction (X) to the first longitudinal position, whereby the article layer (15) is set down on the transport auxiliary aid (105) or on a layer stack (100) which is situated on the transport auxiliary aid (105).

## Revendications

1. Dispositif de palettisation (10) destiné à poser des couches d'articles (15) sur un auxiliaire de transport (105), ledit dispositif de palettisation comprenant un dispositif de levage (20) qui est conçu sous la forme d'une colonne et qui comporte au moins trois côtés (21, 22, 23) et au moins trois modules de guidage distincts (41, 42, 43),
l'un des au moins trois modules de guidage (41, 42, 43) étant disposé sur au moins trois côtés (21, 22, 23), et au moins un chariot (31, 32, 33) étant guidé de manière mobile dans une direction verticale (Z) sur au moins trois modules de guidage (41, 42, 43),
un dispositif de pose (50), qui définit une surface de transport (53) destiné au transport d'une couche d'articles (15) dans une direction longitudinale (X), étant fixé à un premier chariot (31), qui est disposé sur un premier côté (21),
**caractérisé en ce que**
les au moins trois côtés (21, 22, 23) sont orientés parallèlement à la direction verticale (Z) et en étant inclinés les uns par rapport aux autres,
au moins deux des angles (A1, A2, A3) entre deux des trois côtés (21, 22, 23) étant différents de 90°.

2. Dispositif de palettisation (10) selon la revendication 1, **caractérisé en ce que** chacun des angles (A1, A2, A3) entre deux des côtés (21, 22, 23) est compris dans une gamme comprise entre 1° et 89°, de préférence entre 50° et 70°.

3. Dispositif de palettisation (10) selon l'une des revendications précédentes, **caractérisé en ce qu'**un entraînement distinct destiné au déplacement dans la direction verticale (Z) est associé à chacun des chariots (31, 32, 33).

4. Dispositif de palettisation (10) selon l'une des revendications précédentes, **caractérisé en ce que** les chariots (31, 32, 33) sont mobiles indépendamment les uns des autres dans la direction verticale (Z).

5. Dispositif de palettisation (10) selon la revendication 1, **caractérisé en ce que** le dispositif de pose (50) est conçu sous la forme d'une bande de pose et comprend une sangle de transport (52) circulant en circuit fermé.

6. Dispositif de palettisation (10) selon l'une des revendications 1 à 5, **caractérisé en ce que** le dispositif de pose (50) est mobile dans la direction longitudinale (X) par rapport au premier chariot (31) entre une première position longitudinale et une deuxième position longitudinale.

7. Dispositif de palettisation (10) selon l'une des revendications 1 à 6, **caractérisé en ce qu'**un dispositif de compression (80) destiné à orienter une couche d'articles (15) est fixé sur un deuxième chariot (32) qui est disposé sur un deuxième côté (22).

8. Dispositif de palettisation (10) selon la revendication 7, **caractérisé en ce que** le dispositif de compression (80) est fixé au deuxième chariot (32) au moyen d'un deuxième bras de fixation (85) qui passe par un plan défini par le premier côté. (21).

9. Dispositif de palettisation (10) selon l'une des revendications 7 à 8, **caractérisé en ce que** le dispositif de compression (80) comporte au moins une butée avant (81) et une butée arrière (82),
la surface de transport (53) du dispositif de pose (50) étant disposée de manière décalée dans la direction longitudinale (X) par rapport au dispositif de compression (80) lorsque le dispositif de pose (50) se trouve dans une première position longitudinale, et
une couche d'articles (15) située sur la surface de transport (53) étant disposée dans la direction longitudinale (X) entre les butées (81, 82) lorsque le dispositif de pose (50) est dans une deuxième position longitudinale.

10. Dispositif de palettisation (10) selon l'une des revendications 1 à 9, **caractérisé en ce qu'**un dispositif de transfert (70), qui définit une surface de transport (73) destinée au transport d'une couche d'articles (15) dans la direction longitudinale (X), est fixé sur un troisième chariot (33) qui est disposé sur un troisième côté (23).

11. Dispositif de palettisation (10) selon la revendication 10, **caractérisé en ce que** le dispositif de transfert (70) est conçu sous la forme d'une bande de transfert et comprend une bande de transport (72) circulant en circuit fermé.

12. Dispositif de palettisation (10) selon l'une des revendications 10 à 11, **caractérisé en ce que** le dispositif de transfert (70) est fixé au troisième chariot (33) au moyen d'un troisième bras de fixation (75) qui passe par un plan défini par le premier côté (21) .

13. Dispositif de palettisation (10) selon l'une des revendications 11 à 12, **caractérisé en ce que** la surface de transport (53) du dispositif de pose (50) est disposée de manière immédiatement adjacente à la surface de transport (73) du dispositif de transfert (70) de sorte qu'une couche d'articles (15) située sur la surface de transport (73) puisse être transportée dans la direction longitudinale (X) sur la surface de transport (53) lorsque le dispositif de pose (50) se trouve dans la première position longitudinale, et **en ce que** la surface de transport (53) du dispositif de pose (50) est disposée de manière décalée dans la direction longitudinale (X) par rapport à la surface de transport (73) du dispositif de transfert (70) lorsque le dispositif de pose (50) se trouve dans la deuxième position longitudinale.

14. Procédé de fonctionnement d'un dispositif de palettisation (10) destiné à poser une couche d'articles (15) sur un auxiliaire de transport (105) selon l'une des revendications 1 à 6, ledit procédé comprenant les étapes suivantes :
- déplacer le premier chariot (31), sur lequel le dispositif de pose (50) est disposé, dans la direction verticale (Z) jusqu'à une position en hauteur spécifiée ;
- déplacer un deuxième chariot (32), sur lequel un dispositif de compression (80) est disposé qui est destiné à orienter la couche d'articles (15) et qui comporte au moins une butée avant (81) et une butée arrière (82), dans la direction verticale (Z) jusqu'à une position en hauteur spécifiée ;
- transporter la couche d'articles (15) vers un dispositif de transfert (70) qui est fixé à un troisième chariot (33) ;
- déplacer le troisième chariot (33) jusqu'à une position en hauteur spécifiée ;
- transporter la couche d'articles (15) du dispositif de transfert (70) au dispositif de pose (50), tandis que le dispositif de pose (50) est dans une première position longitudinale dans laquelle le dispositif de pose (50) est disposé de manière immédiatement adjacente au dispositif de transfert (70) dans la direction longitudinale (X),
- déplacer le dispositif de pose (50) par rapport au premier chariot (31) dans la direction longitudinale (X) jusqu'à une deuxième position longitudinale dans laquelle la couche d'articles (15) est disposée dans la direction longitudinale (X) entre les butées (81, 82),
- déplacer le dispositif de pose (50) par rapport au premier chariot (31) dans la direction longitudinale (X) jusqu'à la première position longitudinale, ce qui permet de poser la couche d'articles (15) sur l'auxiliaire de transport (105) ou sur une pile de couches (100) située sur l'auxiliaire de transport (105) .
